# EUROPÄISCHE PATENTSCHRIFT

(11) **EP 3 704 922 B1**
(45) Veröffentlichungstag und Bekanntmachung des Hinweises auf die Patenterteilung: **14.08.2024**
(21) Anmeldenummer: 20401005.2
(22) Anmeldetag: 22.01.2020
(51) Int. Cl.: A01C 5/06

(54) **SCHARANORDNUNG UND VERTEILMASCHINE MIT EINER SCHARANORDNUNG**
COULTER ASSEMBLY AND DISTRIBUTION MACHINE WITH SAME ASSEMBLY
AGENCEMENT DES SOCS ET MACHINE DE DISTRIBUTION DOTÉE D'UN AGENCEMENT DES SOCS

(30) Priorität: 06.03.2019 DE 102019105624
(43) Veröffentlichungstag der Anmeldung: 09.09.2020
(73) Patentinhaber: Amazonen-Werke H. Dreyer SE & Co. KG, 49205 Hasbergen (DE)
(72) Erfinder: Ammermann, Wilfried, 26203 Wadenburg (DE); Bornhorst, Werner, 49413 Dinklage (DE); Stier, Roy, 26121 Oldenburg (DE); Lummer, Bernd, 27804 Berne (DE); Koch, Jens, 29525 Uelzen (DE); Henke, Christian, 30938 Burgwedel (DE)

(56) Entgegenhaltungen:
- WO-A1-2010/138068
- WO-A1-88/05997
- WO-A2-2014/105560
- DE-A1- 102006 007 624

## Beschreibung

Die Erfindung betrifft eine Scharanordnung gemäß dem Oberbegriff des Patentanspruches 1 und eine Verteilmaschine mit einer Scharanordnung gemäß dem Oberbegriff des Patentanspruches 10.

Eine derartige Scharanordnung ist in WO 2014/105560 A2 offenbart.

Eine weitere Scharanordnung und eine Verteilmaschine sind in EP 2434860 B1 beschrieben. Diese Scharanordnung für ein als Düngerschar ausgeführtes Scheibenschar umfasst einen Tragarm zur Befestigung der Scharanordnung an einem Rahmen der Verteilmaschine. Ferner umfasst die Scharanordnung eine am unteren, dem der Befestigung am Rahmen abgewandten Ende des Tragarms drehbar gelagerte Scharscheibe und einen Furchenformer. Die Scharscheibe wird im Betrieb in gewünschter Arbeitstiefe am Tragarm durch den Boden geführt, wobei der Furchenformer sich mittels einer Haltevorrichtung relativ zur Scharscheibe am unteren Ende des Tragarms anordnen lässt. Die Verteilmaschine umfasst ferner einen Vorratsbehälter für Saatgut und/oder Dünger, welcher über zumindest eine Ausbringeinrichtung mittels Ausbringleitungen mit einer Mehrzahl von quer zur Fahrtrichtung nebeneinander angeordneten Scheibenscharen, insbesondere den Furchenformern, verbunden ist. Die Verteilmaschine ist somit dazu eingerichtet Saatgut und/oder Dünger über die Scheibenschare zu verteilen.

Zur Befestigung des Furchenformers am Tragarm weist die Haltevorrichtung einen plattenartigen Scharträger auf, welcher an dem Furchenformer befestigt ist und diesen so trägt. Der Furchenformer ist über den Scharträger mittels zwei beabstandet zueinander angeordneten Befestigungsbolzen am Tragarm lösbar befestigt. Die Befestigungsbolzen sind als Schraubbolzen ausgeführt und durchsetzen den Tragarm und den Scharträger an dafür vorgesehenen Bohrungen. Mit Hilfe zweier auf die Schraubbolzen aufschraubbarer, als Sicherungsmuttern ausgeführter Sicherungselemente mit zugeordneten Unterlegscheiben gegen ungewolltes Lösen der Sicherungselemente ist der Scharträger lösbar am Tragarm festgelegt.

Nachteilig bei dieser Scharanordnung ist, dass die beiden Befestigungsbolzen eine Achse bilden, um die der Furchenformer sich gegenüber dem Tragarm und insbesondere der Scharscheibe verschwenken kann. Die Lagerung des Furchenformers ist somit in axialer Richtung unterbestimmt, so dass keine sichere Anordnung des Furchenformers relativ zur Scharscheibe möglich ist. Dies ist besonders nachteilig, da angestrebt wird den Furchenformer zumindest annährend in Anlage zur Scharscheibe zu halten, um mittels der Scharanordnung definierte Ablagebedingungen für Saatgut und/oder Dünger für die Verteilmaschine zu schaffen.

Die der Erfindung zugrunde liegende Aufgabe besteht somit darin, eine einfache und sichere Befestigung für eine definierte Zuordnung des Furchenformers an der Scharscheibe zu schaffen.

Diese Aufgabe wird erfindungsgemäß durch eine Scharanordnung gemäß Anspruch 1 gelöst. Es ist vorgesehen, dass zumindest drei Befestigungsbolzen vorgesehen sind, wobei die zumindest drei Befestigungsbolzen die Eckpunkte eines Dreiecks bildend angeordnet sind.

Infolge dieser Maßnahme ist eine kippsichere Befestigung des Furchenformers am Tragarm geschaffen. Durch die drei im Dreieck zueinander angeordneten Befestigungsbolzen ist eine bestimmte Lagerung des Furchenformers am Tragarm erreicht, so dass eine definierte Anordnung des Furchenformers relativ zur Scharscheibe ermöglicht ist. Die Erfindung macht sich die Erkenntnis zunutze, dass durch die Anordnung zumindest eines dritten Befestigungsbolzens, der nicht auf der Achse zwischen den anderen beiden Befestigungsbolzen liegt, in besonders einfacher und zweckmäßiger Weise eine sichere Befestigung für die definierte Zuordnung des Furchenformers an der Scharscheibe geschaffen ist.

In einer vorteilhaften Weiterbildung der Scharanordnung ist vorgesehen, dass den zumindest drei Befestigungsbolzen auf der dem Tragarm abgewandten Seite des Scharträgers und zwischen Scharträger und Tragarm, vorzugsweise jeweils und/oder auf jeder Seite des Scharträgers, zumindest ein elastisches Federelement zugeordnet ist. Der Einsatz elastischer Federelemente erlaubt es, dass der Furchenformer über den Scharträger mittels der Federelemente sich der Kontur der Scharscheibe anpassen kann. In vorteilhafter Weise ist die Zuordnung des Furchenformers an der Scharscheibe somit weiter verbessert. Die Federelemente können als elastische, zumindest annährend ringförmige Gummischeiben ausgeführt sein, welche eine Ausnehmung zum Auffädeln des Federelementes auf einen Befestigungsbolzen aufweisen. Die Federelemente können als mattenartiges Scheibenelement ausgeführt sein, welches zumindest drei Ausnehmungen zum Auffädeln auf die zumindest drei Befestigungsbolzen aufweist.

Um die Anordnung des Furchenformers relativ zur Scharscheibe weiter zu verbessern, ist in einer weiteren vorteilhaften Weiterbildung der Scharanordnung die Scharscheibe zumindest annährend innerhalb des von den Befestigungsbolzen aufgespannten Dreiecks am Tragarm drehbar gelagert. Die zumindest drei Befestigungsbolzen, welche die Eckpunkte eines Dreiecks bilden, durchsetzen den Tragarm und spannen somit zwischen sich ein Dreieck am Tragarm auf. Durch die Lagerung der Scharscheibe zumindest annährend innerhalb dieses Dreiecks liegt die Drehachse der Scharscheibe ebenfalls innerhalb dieses Dreiecks. Untersuchungen haben gezeigt, dass eine derartige Anordnung besonders robust gegen Erschütterungen und Vibrationen ist, so dass die Anordnung des Furchenformers relativ zur Scharscheibe besonders im bodeneingreifenden Betrieb verbessert ist. Diese Weiterbildung zeichnet sich folglich durch eine besonders sichere und robuste Lagerung der Scharscheibe aus.

In einer weiteren vorteilhaften Weiterbildung der Erfindung ist vorgesehen, dass der Scharträger zumindest zwei beabstandet zueinander angeordnete Ausnehmungsbilder mit jeweils zumindest drei von den Befestigungsbolzen durchsetzbaren Ausnehmungen aufweist, dass der Furchenformer mittels der zumindest zwei Ausnehmungsbilder über die zumindest drei Befestigungsbolzen in zumindest zwei unterschiedlichen Lagen zur Scharscheibe befestigbar ist. Vorzugsweise sind die Ausnehmungsbilder in unterschiedlichem Abstand zum Mittelpunkt der Scharscheibe angeordnet, so dass der Furchenformer relativ zur Scharscheibe in unterschiedlichen Positionen am Tragarm befestigbar ist. Infolge dieser Maßnahme ist die Arbeitstiefe des Furchenformers relativ zur Arbeitstiefe der Scharscheibe einstellbar.

Erfindungsgemäß ist vorgesehen, dass der Tragarm zumindest zwei beabstandet zueinander angeordnete Bohrbilder mit jeweils zumindest drei von den Befestigungsbolzen durchsetzbaren Bohrungen aufweist, wobei der Furchenformer mittels der zumindest zwei Bohrbilder über die zumindest drei Befestigungsbolzen in zumindest zwei unterschiedlichen Lagen zum Tragarm befestigbar ist. Vorzugsweise sind die Bohrbilder kreisförmig um den Mittelpunkt der Scharscheibe angeordnet, so dass der Furchenformer in den unterschiedlichen Lagen zum Tragarm gegenüber der Drehachse der Scharscheibe verdreht wird, so dass sich die Anordnung des Furchenformers relativ zur Scharscheibe nahezu nicht ändert. Die Arbeitstiefe der Scharscheibe kann verändert werden, indem der Tragarm verschwenkt wird. Es ist denkbar, dass der Rahmen zumindest teilweise drehbar ist, so dass der Tragarm durch Drehung des Rahmenteils, an dem er befestigt ist, verschwenkbar ist. Hierbei verändert sich die Orientierung des Furchenformers zur zu bearbeitenden Bodenoberfläche. Um diese veränderte Orientierung zu berücksichtigen, ist der Furchenformer mittels der zumindest zwei Bohrbilder in angepasster Lage zum Tragarm befestigbar, wobei sich die Zuordnung zur Scharscheibe zumindest annährend nicht ändert. Durch diese Weiterbildung ist folglich in zweckmäßiger Weise eine Anpassungsmöglichkeit zur Einstellung der Arbeitstiefe der Scharscheibe gemeinsam mit dem Furchenformer geschaffen. Ferner ist infolge dieser Maßnahme der Winkel des Furchenformers zur Bodenoberfläche einstellbar, indem der Furchenformer in veränderter Lage zum Tragarm befestigt wird, wobei der Tragarm nicht verschwenkt wird. Um den Furchenformer in einer Mehrzahl unterschiedlicher Lagen, insbesondere Winkellagen, gegenüber dem Tragarm zu befestigen, kann der Tragarm mehr als zwei beabstandet zueinander angeordnete Bohrbilder aufweisen.

In einer weiteren vorteilhaften Weiterbildung der Scharanordnung sind die Federelemente in Richtung der Scharscheibe wirkend vorspannbar, wobei zumindest einem Befestigungsbolzen Mittel, die dazu eingerichtet sind, die dem Befestigungsbolzen zugeordneten Federelemente einstellbar vorzuspannen, zugeordnet sind. Durch die Vorspannung der Federelemente ist die Kraft einstellbar mit der der Furchenformer zur Scharscheibe am Tragarm gehalten wird. Ist durch Betätigung der Mittel eine hohe Vorspannung der Federelemente eingestellt, ist die Befestigung des Furchenformers besonders starr. Bei geringer Vorspannung ist die Anordnung des Furchenformers am Tragarm zumindest teilweise elastisch.

In einer weiteren besonders vorteilhaften Weiterbildung der Scharanordnung ist vorgesehen, dass die Mittel zumindest eine Druckscheibe und zumindest einen Spannkörper umfassen, dass die Druckscheibe mittels des Spannkörpers gegen den Scharträger und/oder den Tragarm pressbar ist. Vorzugsweise ist der Spannkörper als auf einen als Schraubbolzen ausgeführten Befestigungsbolzen aufschraubbare Spannmutter ausgeführt. Die Druckscheibe ist vorzugsweise als auf einen Befestigungsbolzen aufschiebbare Unterlegscheibe ausgeführt. Die Druckscheibe und der Spannkörper können einstückig, also nicht lösbar verbunden, ausgeführt sein. Vorzugsweise ist der Spannkörper lösbar an einem Befestigungsbolzen festlegbar, so dass die Vorspannung eines Federelementes durch Festlegen des Spannkörpers in einer bestimmten Position, welche eine damit korrespondierende vorzugsweise elastische Verformung des Federelementes hervorruft, einstellbar ist. Infolge dieser Maßnahme ist die Vorspannung der Federelemente über das Maß mit dem die Druckscheibe mittels des Spannkörpers angepresst wird einstellbar.

In einer weiteren vorteilhaften Weiterbildung der Scharanordnung ist vorgesehen, dass der Furchenformer mittels der Federelemente zumindest annährend selbsttätig in Anlage an die Scharscheibe gehalten ist. Im Betrieb wird der Furchenformer am Tragarm befestigt durch den Boden geführt und erfährt so einen abrasiven Verschleiß. Vorteilhaft ist hierbei, dass infolge dieser Maßnahme die Befestigung so weitergebildet ist, dass sie sich mit fortschreitendem Verschleiß des Furchenformers selbsttätig nachstellt, das heißt den Furchenformer bei abnehmender Materialstärke desselbigen zumindest annährend in Anlage zur Scharscheibe hält. Dies ist besonders zweckmäßig, da dadurch das Risiko von Verstopfungen zwischen Furchenformer und Scharscheibe durch Pflanzenrückstände reduziert ist.

Die Scharanordnung ist außerdem vorteilhaft dadurch weitergebildet, dass der Furchenformer mittels der den zumindest drei Befestigungsbolzen zugeordneten Federelemente zumindest teilweise federnd, insbesondere gegenüber der Scharscheibe, ausweichbar an dem Tragarm befestigt ist. Um Beschädigungen der Scharanordnung bei der Bearbeitung steiniger Böden zu vermeiden, ist infolge dieser Weiterbildung eine Scharanordnung geschaffen, dessen Furchenformer dazu eingerichtet ist, Ausweichbewegungen, insbesondere quer zur Fahrtrichtung, auszuführen, so dass beim Auftreffen auf im Boden befindliche Hindernisse Beschädigungen zumindest teilweise vermieden werden.

In einer weiteren vorteilhaften Weiterbildung der Scharanordnung ist die Haltervorrichtung einstückig mit dem Furchenformer ausgeführt, wobei die Haltevorrichtung zumindest teilweise als Verteilleitung ausgeführt ist. Um Saatgut und/oder Dünger direkt in die dafür vorgesehene vom Furchenformer geschaffene Furche abzugeben, ist es zweckmäßig, dass die Haltevorrichtung zumindest teilweise als Verteilleitung nutzbar ist. Vorzugsweise ist das untere Ende der Haltevorrichtung als Verteilleitung ausgeführt. Das Material kann somit besonders nah an gewünschter Stelle abgegeben werden und eine zusätzliche Verteilleitung kann zumindest teilweise entfallen. In vorteilhafter Weise ist die Haltevorrichtung so doppelt nutzbar. Weiter vorteilhaft ist, dass durch die Ausführung der Haltevorrichtung mit dem Furchenformer als ein Teil, der Furchenformer nicht verlierbar am Tragarm befestigt ist.

Die der Erfindung zugrunde liegende Aufgabe wird ferner durch eine Verteilmaschine mit den Merkmalen des Anspruchs 10 gelöst. Es ist vorgesehen, dass die Verteilmaschine zumindest ein über eine Scharanordnung an einem Rahmen der Verteilmaschine angeordnetes Scheibenschar umfasst und die Scharanordnung nach zumindest einer der vorstehend beschriebenen Ausführungsformen ausgeführt ist. Bezüglich der Vorteile und Modifikationen der erfindungsgemäßen Verteilmaschine wird auf die Vorteile und Modifikationen der erfindungsgemäßen Scharanordnung verwiesen.

Erfindungsgemäß ist die Arbeitstiefe des Scheibenschars mittels Verdrehung des Rahmens einstellbar, wobei der Furchenformer über die zumindest zwei Bohrbilder des Tragarms an die Arbeitstiefe der Scharscheibe angepasst am Tragarm befestigbar ist. Um bei Verschwenken des Tragarms durch Verdrehung des Rahmens, den Winkelfehler des Furchenformers auszugleichen, kann der Furchenformer über die zumindest zwei Bohrbilder in um den Mittelpunkt der Scheibe gedrehter Lage am Tragarm befestigt werden.

Weitere Einzelheiten der Erfindung sind der Beispielsbeschreibung und den Zeichnungen zu entnehmen. Die Zeichnungen zeigen
- Fig.1: eine Verteilmaschine mit einer Mehrzahl über erfindungsgemäße Scharanordnungen angeordneter Scheibenschare in perspektivischer Ansicht,
- Fig.2: eine der Scharanordnungen aus Fig.1 in von der Verteilmaschine demontiertem Zustand in perspektivischer Ansicht,
- Fig.3: die Scharanordnung aus Fig.2 in Explosionsdarstellung,
- Fig.4: die Scharanordnung aus Fig.2 in Detailansicht, und
- Fig.5: die Scharanordnung aus Fig.2 in Frontansicht.

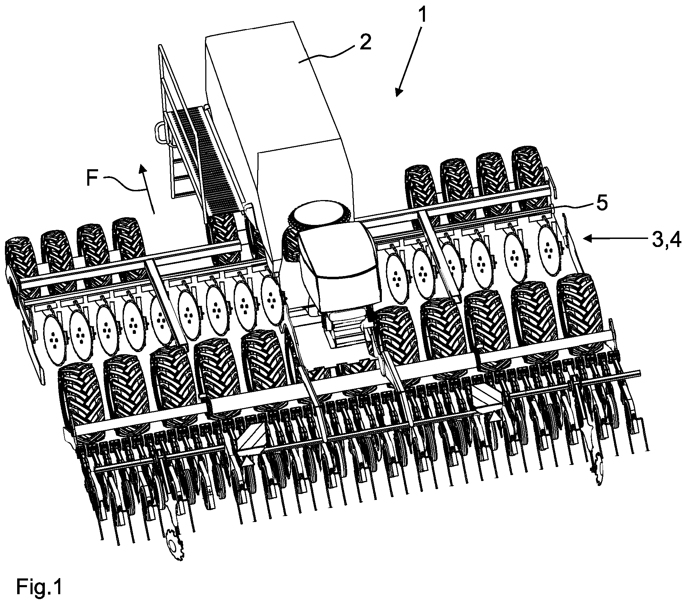

Eine Verteilmaschine 1 zum Ausbringen von Saatgut und/oder Dünger auf einer landwirtschaftlichen Nutzfläche ist in Fig.1 gezeigt. Die Verteilmaschine 1 umfasst einen in Fahrtrichtung F lang gestreckten Vorratsbehälter 2 für das auszubringende Material. Am unteren Ende des Vorratsbehälters 2 ist eine verdeckte Ausbringeinrichtung angeordnet, welche Material aus dem Vorratsbehälter 2 in eine Mehrzahl von nicht gezeigten Ausbringleitungen einspeist. Um das Saatgut bzw. den Dünger geeignet in den Boden der Nutzfläche einzuarbeiten, umfasst die Verteilmaschine 2 ferner eine Mehrzahl von Scheibenscharen 3. Die Scheibenschare 3 sind quer zur Fahrtrichtung F nebeneinander über jeweils eine Scharanordnung 4 an einem Rahmen 5 der Verteilmaschine 1 angeordnet und werden so im Betrieb der Verteilmaschine 1 durch den Boden der landwirtschaftlichen Nutzfläche bewegt. Um währenddessen Saatgut und/oder Dünger auszubringen, sind die Scheibenschare 3 jeweils über eine der nicht dargestellten Ausbringleitungen mit der Ausbringeinrichtung verbunden. Zur Einstellung der Arbeitstiefe der Scheibenschare 3 ist der Rahmen 5 drehbar, so dass die Scheibenschare 3 gegenüber dem Fahrwerk der Verteilmaschine 1 in veränderter Höhe getragen werden.

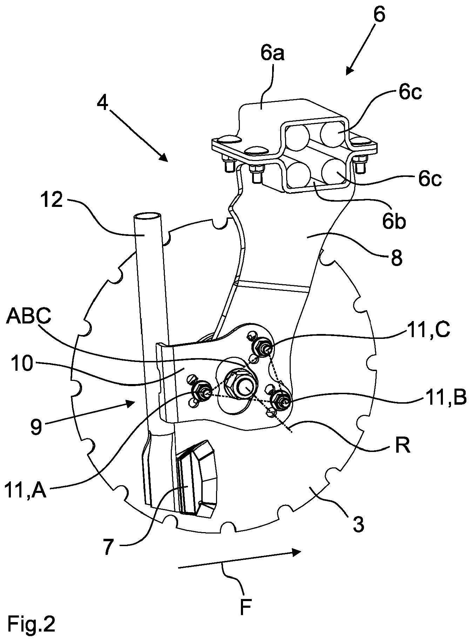

Eine der Scharanordnungen 4 in von der Verteilmaschine 1 gelöstem Zustand ist in Fig.2 gezeigt. Die Scharanordnung 4 für das als Düngerschar ausgeführte Scheibenschar 3 ist über eine Lagerung 6 am als Vierkantrohr ausgeführten Rahmen 5 der Verteilmaschine 1 angeordnet und umfasst neben der Scharscheibe 3 einen keilartigen Furchenformer 7. Die Lagerung 6 weist eine obere Lagerschale 6a und eine untere Lagerschale 6b auf, die zusammen dazu eingerichtet sind den Rahmen 5 zu umgreifen, so dass die Scharanordnung 4 am Rahmen 5 getragen wird. Die obere und untere Lagerschale 6a, b sind hierzu mittels als Schraube-Mutter-Verbindung ausgeführter Befestigungsmittel lösbar aneinander befestigt und umfassen elastische Lagerelemente 6c, die als längliche Rundgummis ausgeführt sein, zur Dämpfung.

Die untere Lagerschale 6b ist nicht lösbar mit einem Tragarm 8 verbunden, an dessen unteren Ende die Scharscheibe 3 drehbar um eine Rotationsachse R gelagert ist. Der keilartige Furchenformer 7 verbreitert sich in Fahrtrichtung F nach hinten, so dass eine Furche bei Bewegung durch den Boden zurückbleibt, und ist mittels einer Haltevorrichtung 9 ebenfalls am unteren Ende des Tragarms 8 befestigt. Die Haltevorrichtung 9 umfasst einen flanschartigen Scharträger 10, der nicht lösbar mit dem Furchenformer 7 verbunden ist. Der Furchenformer 7 ist über den Scharträger 10 mittels insgesamt drei als Schraubbolzen 11 ausgeführten Befestigungsbolzen am Tragarm 8 befestigt. Die Schraubbolzen 11 durchsetzen den Tragarm 8 an Bohrungen 8a und den Scharträger 10 an mit den Bohrungen 8a in Deckung gebrachten Ausnehmungen 10a und sind an ihrem freien, der Scharscheibe 3 abgewandten Ende mit einer Mutter 11a gegen ungewolltes Losrütteln gesichert. Die Schraubbolzen 11 bilden in Seitenansicht, quer zur Fahrrichtung gesehen die Eckpunkte A, B, C eines Dreiecks ABC. Die Befestigung des Furchenformers 7 am Tragarm 8 ist somit besonders kippsicher und einfach gestaltet. Durch die drei im Dreieck ABC angeordneten Schraubbolzen 11 ist der Furchenformer 7 besonders zuverlässig in Anlage zur Scharscheibe 3 gehalten, so dass die Scharanordnung 4 sich durch besonders zuverlässige und gleichbleibende Arbeitsqualität auszeichnet. Die Scharscheibe 3 ist innerhalb des Dreieckts ABC am Tragarm 8 drehbar gelagert, das heißt die Rotationsachse R liegt innerhalb des Dreiecks ABC und steht zumindest annährend senkrecht zu diesem.

Um im Betrieb der Verteilmaschine 1 Saatgut und/oder Dünger zu verteilen, ist der Furchenformer 7 über die zumindest teilweise als Verteilleitung 12 ausgeführte Haltevorrichtung 9 mit den nicht dargestellten Ausbringleitungen verbindbar. Das von der Ausbringeinrichtung abgegebene Material wird dann zumindest teilweise über die rohrartige Verteilleitung 12 an dem mit der Scharscheibe 3 gemeinsam durch den Boden bewegten Furchenformer 7 abgegeben und so über die geschaffene Furche in den Boden eingearbeitet. Da der Furchenformer 7 im Bodenkontakt erhebliche Widerstandskräfte erfährt, ist die Haltevorrichtung 9 zweckmäßiger Weise einstückig, das heißt nicht lösbar verbunden, mit dem Furchenformer 7 ausgeführt.

Um die Arbeitstiefe der der Scharscheibe 3 und des Furchenformers 7 gemeinsam zu verändern kann der Rahmen 5 der Verteilmaschine 1, wie vorstehend erwähnt, gedreht werden. Durch die lenkerartige Anbindung der Scharscheibe 3 und des Furchenformers 7 über den Tragarm 8 an dem Rahmen 5 schwenken diese bei Drehung des Rahmens 5 je nach Drehrichtung nach oben bzw. unten. Die Scharscheibe 3 und der Furchenformer 7 werden dann gegenüber dem Rahmen 5 bzw. dem Fahrwerk der Verteilmaschine 1 in veränderter Höhe getragen, so dass sie eine veränderte Arbeitstiefe aufweisen. Da der Furchenformer 7 dabei über den als Hebelarm wirkenden Tragarm 8 um die Lagerung 6 gedreht wird, steht der Furchenformer 7 in verändertem Winkel zum Untergrund.

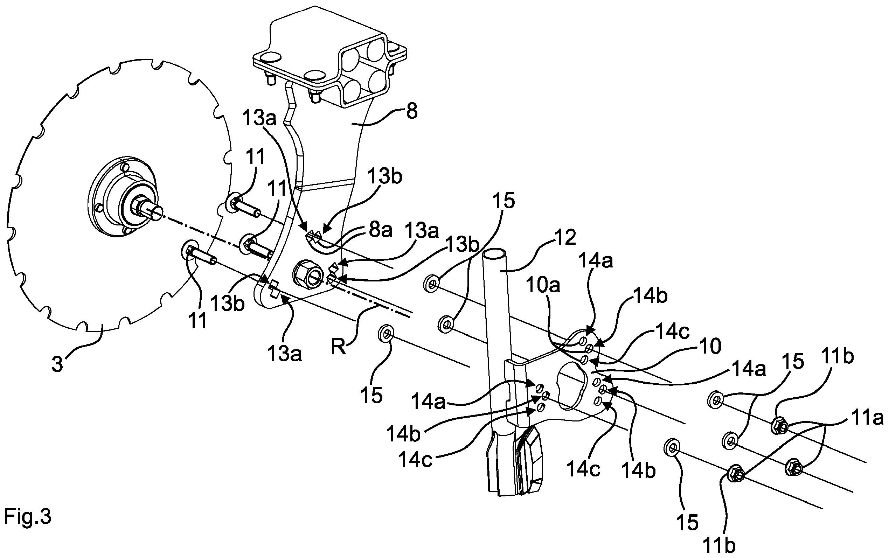

Um den Winkel in dem der Furchenformer 7 gegenüber dem Tragarm 8 getragen wird einzustellen, ist vorgesehen, dass der Tragarm 8 zwei beabstandet zueinander um die Rotationsachse R der Scharscheibe 3 gedrehte Bohrbilder 13a, 13b aufweist, wie Fig.3 zeigt. Jedes der Bohrbilder 13a, 13b besteht aus drei korrespondierenden Bohrungen 8a, wobei die Bohrungen 8a des Bohrbildes 13b gegenüber dem Bohrbild 13a um die Rotationsachse R im Uhrzeigerzinn vorauseilen in Fig.3. Der Furchenformer 7 ist folglich mittels der beiden Bohrbilder 13a, 13b über die drei Schraubbolzen 11 in zwei unterschiedlichen Lagen zum Tragarm 8 befestigbar, indem die Schraubbolzen 11 entweder durch die Bohrungen 8a des einen oder anderen Bohrbildes 13a oder 13b hindurchgesteckt werden. Auf diese Weise ist eine Winkeleinstellung des Furchenformers 7 zum Tragarm 8 bzw. zur Oberfläche des zu bearbeitenden Bodens realisiert. Der Furchenformer 7 ist folglich über die Bohrbilder 13a, 13b an die Arbeitstiefe der Scharscheibe 3 angepasst am Tragarm 8 befestigbar. Bei vorgegebener Arbeitstiefe der Scharscheibe 3 ist der Winkel in dem der Tragarm 8 über die Lagerung 6 am Rahmen 5 zum Boden steht bekannt, so dass der Furchenformer 7 danach ausgerichtet werden kann. Zweckmäßiger Weise lässt sich so der Abgabewinkel von über die rohrartige Verteilleitung 12 zugeführtem Saatgut und/oder Dünger aus dem Furchenformer 7 einstellen, ebenso wie die Form der vom Furchenformer 7 erzeugten Furche.

Der Furchenformer 7 kann mittels der Bohrbilder 13a, 13b gegenüber dem Tragarm 8 in verdrehter Position befestigt werden. Um einen größeren Einstellbereich abzudecken, kann es zweckmäßig sein mehr als zwei beabstandete Bohrbilder 13a, 13b am Tragarm 8 vorzusehen und/oder diese in verändertem Abstand zueinander anzuordnen. Die Anordnung der Bohrbilder 13a, 13b in um die Rotationsachse R gedrehtem Abstand bietet den Vorteil, dass die Zuordnung zwischen dem Furchenformer 7 und der Scharscheibe 3 hierdurch nahezu nicht verändert wird. In einer nicht gezeigten Ausführungsform weist der Tragarm 8 weitere in vertikaler und/oder horizontaler Richtung beabstandete Bohrbilder 13a, 13b auf.

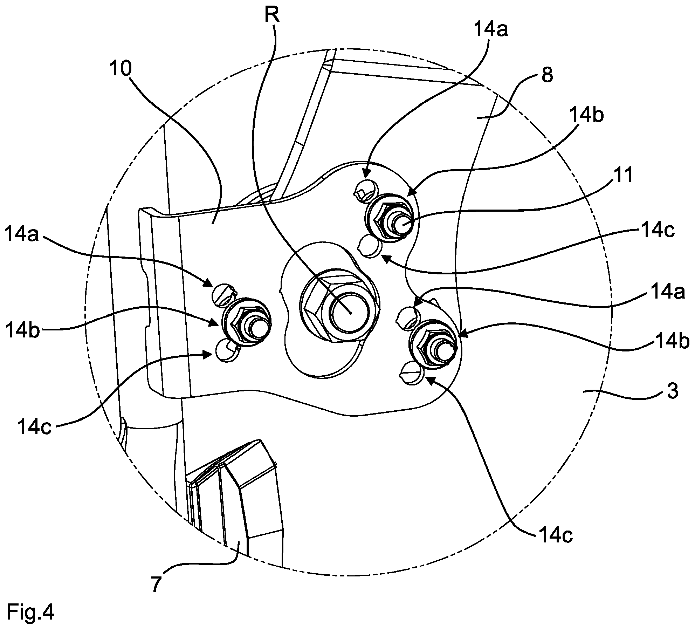

Um die Höhe in der der Furchenformer 7 gegenüber der Scharscheibe 3 am Tragarm 8 getragen ist einzustellen, ist vorgesehen, dass der Scharträger 10 drei beabstandet zueinander angeordnete Ausnehmungsbilder 14a, 14b, 14c aufweist, wie Fig.3 zeigt. Jedes der Ausnehmungsbilder 14a, 14b, 14c setzt sich zusammen aus drei korrespondierenden Ausnehmungen 10a im Scharträger 10, wobei die Ausnehmungen 10a des Ausnehmungsbildes 14a jeweils in zumindest annährend vertikaler Richtung über denen der Ausnehmungsbilder 14b, 14c angeordnet sind, so dass der Furchenformer 7 radial nach außen versetzt an der Scharscheibe 3 getragen wird, wenn die Schraubbolzen 11 durch die Ausnehmungen 10a des Ausnehmungsbildes 14a geführt sind. Die Ausnehmungen 10a des Ausnehmungsbildes 14c sind korrespondierend für die entgegengesetzte Endstellung des Furchenformers 7, nahe der Rotationsachse R der Scharscheibe 3, unten am Scharträger 10 angeordnet, so dass der Furchenformer 7 radial nach innen versetzt an der Scharscheibe 3 vom Tragarm 8 bzw. den Schraubbolzen 11 getragen wird. Die Mittelstellung des Furchenformers 7 an der Scharscheibe 3 über den am Tragarm 8 befestigten Scharträger 10 ist in Fig.4 in Detailansicht gezeigt. Die Schraubbolzen 11 durchgreifen den Tragarm 8 im Bohrbild 13b, welches mit dem Ausnehmungsbild 14b im Scharträger 10 in Deckung gebracht ist, so dass der Furchenformer 7 in mittlerem Abstand zur Rotationsachse R an der Scharscheibe 3 getragen wird. Der Furchenformer 7 ist folglich mittels der drei Ausnehmungsbilder 14a-c über die Schraubbolzen 11 in drei unterschiedlichen Lagen zur Scharscheibe befestigbar. Die drei Stellungen des Furchenformers 7 unterscheiden sich hinsichtlich des Abstandes in dem er zur Rotationsachse R der Scharscheibe 3 getragen wird bzw. in welcher Arbeitstiefe der Furchenformer 7 relativ zur Scharscheibe 3 arbeitet.

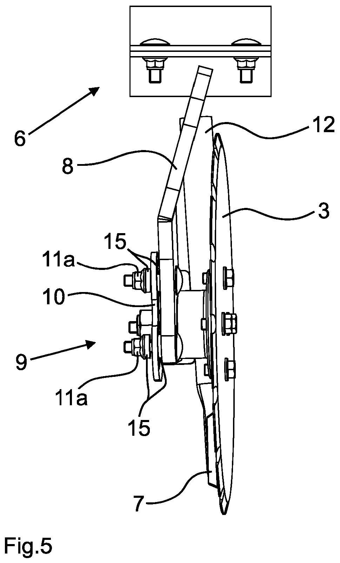

Wie in Fig.3 und Fig.5 gezeigt, sind den Schraubbolzen 11 auf beiden Seiten des Scharträgers 10, das heißt auf der dem Tragarm 8 abgewandten Seite des Scharträgers 10 und zwischen Scharträger 10 und Tragarm 8, jeweils ein als Federring 15 ausgeführtes elastisches Federelement zugeordnet. Die Federringe 15 sind vorzugsweise aus einem elastischen Kunststoff ausgeführt und werden in vorbeschriebener Anordnung vor den Muttern 11a auf die Schraubbolzen 11 aufgefädelt, so dass der Furchenformer 7 federnd ausweichbar gegenüber der Scharscheibe 3 am Tragarm 8 befestigt ist.

Die Federringe 15 sind mittels der Muttern 11a in Richtung der Scharscheibe 3 wirkend vorspannbar, indem die Muttern 11a mit definiertem Drehmoment auf den Schraubbolzen 11 angezogen werden. Die Muttern 11a sind einstückig mit einer Unterlegscheibe 11b ausgeführt. Die Unterlegscheibe 11b wird durch Aufschrauben der Mutter 11a in Richtung des Scharträgers 10 bzw. des Tragarms 8 gepresst, da die Schraubbolzen 11 auf der gegenüberliegenden Seite des Tragarms 8 festgelegt sind. Die Mutter 11a wirkt insofern als Spannkörper für die als Druckscheibe dienende Unterlegscheibe 11b, um die Federringe 15 zu verspannen. Den Federringen 15 lässt sich folglich durch die Muttern 11a eine über das Anziehdrehmoment definierte Verformung aufprägen. Die Verformung ist wiederum ein Maß für die Vorspannkraft der Federringe 15 in Richtung der Scharscheibe 3, so dass einstellbar ist, mit welcher Kraft der Furchenformer 7 über die mit den Schraubbolzen 11 zusammenwirkenden Federringe 15 selbsttätig in Anlage an die Scharscheibe 3 gehalten wird.

In Fig.5 ist die Scharanordnung 4 in Frontansicht entgegen der Fahrtrichtung F zu sehen. Der Furchenformer 7 ist über die Haltevorrichtung 9 in Anlage an die Scharscheibe 3 gehalten. Die Scharscheibe 3 und der Furchenformer 7 sind über die Lagerung 6 am Rahmen 5 der Verteilmaschine 1 befestigt und werden gemeinsam durch den Boden des zu bearbeitenden Feldes bewegt. Über die Verteilleitung 12 wird im Betrieb Saatgut und/oder Dünger in die vom Furchenformer 7 bereitete Furche abgegeben und so in den Boden eingearbeitet. Die Anordnung des Furchenformers 7 zum Tragarm 8 lässt sich mittels der Bohrbilder 13a, 13b einstellen, so dass der Furchenformer 7 in unterschiedlichen Winkeln zum Boden getragen werden kann. Ferner ist einstellbar welchen Abstand der Furchenformer 7 zum Umfang der Scharscheibe 3 aufweist, indem die Schraubbolzen 11 durch eines der Ausnehmungsbilder 14a-c geführt werden. Somit ist die Arbeitstiefe des Furchenformers 7 relativ zur Arbeitstiefe der Scharscheibe 3 einstellbar. Durch die Federringe 15 wird der Furchenformer 7 auch bei fortschreitendem Verschleiß selbsttätig in Anlage an die Scharscheibe 3 gehalten. Ferner ist der Furchenformer 7 mittels der Federringe 15 dazu eingerichtet, bei Auftreffen auf im Boden befindliche Hindernisse, wie Steine, federnd auszuweichen.

### Bezugszeichenliste

- 1: Verteilmaschine
- F: Fahrtrichtung
- 2: Vorratsbehälter
- 3: Scheibenschar, Scharscheibe
- 4: Scharanordnung
- 5: Rahmen
- 6: Lagerung
- 6a: obere Lagerschale
- 6b: untere Lagerschale
- 7: Furchenformer
- 8: Tragarm
- 8a: Bohrung
- R: Rotationsachse
- 9: Haltevorrichtung
- 10: Scharträger
- 10a: Ausnehmung
- 11: Schraubbolzen
- 11a: Mutter
- 11b: Unterlegscheibe
- A,B,C: Eckpunkt
- ABC: Dreieck
- 12: Verteilleitung
- 13a,b: Bohrbild
- 14a-c: Ausnehmungsbild
- 15: Federring

## Patentansprüche

1. Scharanordnung (4) für ein Scheibenschar (3), insbesondere Düngerschar, umfassend eine am unteren Ende eines Tragarms (8) drehbar gelagerte Scharscheibe (3) und einen mittels einer Haltevorrichtung (9) am unteren Ende des Tragarms (8) angeordneten Furchenformer (7), wobei die Scharanordnung (4) über das obere Ende des Tragarms (8) an einem drehbaren Rahmen (5) einer Verteilmaschine (1) anordbar ist, wobei die Haltervorrichtung (9) einen Scharträger (10) aufweist und der Furchenformer (7) über den Scharträger (10) mittels zumindest zwei beabstandet zueinander angeordneten, insbesondere als Schraubbolzen (11) ausgeführten, den Scharträger (10) und den Tragarm (8) durchsetzenden Befestigungsbolzen (11) am Tragarm (8) befestigt ist, wobeizumindest drei Befestigungsbolzen (11) vorgesehen sind und die zumindest drei Befestigungsbolzen (11) die Eckpunkte (A, B, C) eines Dreiecks (ABC) bildend angeordnet sind, **dadurch gekennzeichnet, dass** der Tragarm (8) zumindest zwei beabstandet zueinander angeordnete Bohrbilder (13a, 13b) mit jeweils zumindest drei von den Befestigungsbolzen (11) durchsetzbaren Bohrungen (8a) aufweist, dass der Furchenformer (7) mittels der zumindest zwei Bohrbilder (13a, 13b) über die zumindest drei Befestigungsbolzen (11) in zumindest zwei unterschiedlichen Lagen zum Tragarm (8) befestigbar ist.

2. Scharanordnung (4) nach Anspruch 1, **dadurch gekennzeichnet, dass** den zumindest drei Befestigungsbolzen (11) auf der dem Tragarm (8) abgewandten Seite des Scharträgers (10) und zwischen Scharträger (10) und Tragarm (8) zumindest ein elastisches Federelement (15) zugeordnet ist.

3. Scharanordnung (4) nach zumindest einem der vorstehenden Ansprüche, **dadurch gekennzeichnet, dass** die Scharscheibe (3) zumindest annährend innerhalb des von den Befestigungsbolzen (11) aufgespannten Dreiecks (ABC) am Tragarm (8) drehbar gelagert ist.

4. Scharanordnung (4) nach zumindest einem der vorstehenden Ansprüche, **dadurch gekennzeichnet, dass** der Scharträger (10) zumindest zwei beabstandet zueinander angeordnete Ausnehmungsbilder (14a-c) mit jeweils zumindest drei von den Befestigungsbolzen (11) durchsetzbaren Ausnehmungen (10a) aufweist, dass der Furchenformer (7) mittels der zumindest zwei Ausnehmungsbilder (14a-c) über die zumindest drei Befestigungsbolzen (11) in zumindest zwei unterschiedlichen Lagen zur Scharscheibe (3) befestigbar ist.

5. Scharanordnung (4) nach zumindest einem der Ansprüche 2 bis 4, **dadurch gekennzeichnet, dass** die Federelemente (15) in Richtung der Scharscheibe (3) wirkend vorspannbar sind, dass zumindest einem Befestigungsbolzen (11) Mittel (11a, 11b), die dazu eingerichtet sind, die dem Befestigungsbolzen (11) zugeordneten Federelemente (15) einstellbar vorzuspannen, zugeordnet sind.

6. Scharanordnung (4) nach Anspruch 5, **dadurch gekennzeichnet, dass** die Mittel (11a, 11b) zumindest eine Druckscheibe (11b) und zumindest einen Spannkörper (11a) umfassen, dass die Druckscheibe (11b) mittels des Spannkörpers (11a) gegen den Scharträger (10) und/oder den Tragarm (8) pressbar ist.

7. Scharanordnung (4) nach Anspruch 5 oder 6, **dadurch gekennzeichnet, dass** der Furchenformer (7) mittels der Federelemente (15) zumindest annährend selbsttätig in Anlage an die Scharscheibe (3) gehalten ist.

8. Scharanordnung (4) nach zumindest einem der Ansprüche 2 bis 7, **dadurch gekennzeichnet, dass** der Furchenformer (7) mittels der den zumindest drei Befestigungsbolzen (11) zugeordneten Federelemente (15) zumindest teilweise federnd, insbesondere gegenüber der Scharscheibe (3), ausweichbar an dem Tragarm (8) befestigt ist.

9. Scharanordnung (4) nach zumindest einem der vorstehenden Ansprüche, **dadurch gekennzeichnet, dass** die Haltervorrichtung (9) einstückig mit dem Furchenformer (7) ausgeführt ist, dass die Haltevorrichtung (9) zumindest teilweise als Verteilleitung (12) ausgeführt ist.

10. Verteilmaschine (1) für Saatgut und/oder Dünger umfassend zumindest einen Vorratsbehälter (2) und zumindest ein über eine Scharanordnung (4) an einem Rahmen (5) der Verteilmaschine (1) angeordnetes Scheibenschar (3), wobei der Vorratsbehälter (2) über zumindest eine Ausbringeinrichtung mittels zumindest einer Ausbringleitung mit dem Scheibenschar (3) verbunden ist und die Verteilmaschine (1) so dazu eingerichtet ist, Saatgut und/oder Dünger am Scheibenschar (3) zu verteilen, **dadurch gekennzeichnet, dass** die Scharanordnung (4) nach zumindest einem der vorstehenden Ansprüche 1-9 ausgeführt ist, dass die Arbeitstiefe des Scheibenschars (3) mittels Verdrehung des Rahmens (5) einstellbar ist, dass der Furchenformer (7) über die zumindest zwei Bohrbilder (13a, 13b) des Tragarms (8) an die Arbeitstiefe der Scharscheibe (3) angepasst am Tragarm (8) befestigbar ist.

## Claims

1. Coulter assembly (4) for a disc coulter (3), in particular a fertilizer coulter, comprising a coulter disc (3) rotatably mounted at the lower end of a support arm (8) and a furrow former (7) arranged by means of a holding device (9) at the lower end of the support arm (8), the coulter assembly (4) being arrangeable on a rotatable frame (5) of a distribution machine (1) via the upper end of the support arm (8), the holding device (9) having a coulter carrier (10) and the furrow former (7) being fastened to the support arm (8) via the coulter carrier (10) by means of at least two fastening bolts (11), in particular designed as screw bolts (11), which are arranged at a distance from one another and pass through the coulter carrier (10) and the support arm (8), at least three fastening bolts (11) being provided and the at least three fastening bolts (11) being arranged so as to form the vertexes (A, B, C) of a triangle (ABC),
**characterized in that** the support arm (8) has at least two drilling patterns (13a, 13b) arranged at a distance from one another, each having at least three holes (8a) through which the fastening bolts (11) can pass, and that the furrow former (7) can be fastened to the support arm (8) in at least two different positions by means of the at least two drilling patterns (13a, 13b) via the at least three fastening bolts (11).

2. Coulter assembly (4) according to claim 1, **characterized in that** at least one resilient spring element (15) is associated with the at least three fastening bolts (11) on the side of the coulter carrier (10) facing away from the support arm (8) and between the coulter carrier (10) and the support arm (8).

3. Coulter assembly (4) according to at least one of the preceding claims, **characterized in that** the coulter disc (3) is rotatably mounted on the support arm (8) at least approximately within the triangle (ABC) spanned by the fastening bolts (11).

4. Coulter assembly (4) according to at least one of the preceding claims, **characterized in that** the coulter carrier (10) has at least two recess patterns (14a-c) arranged at a distance from one another, each having at least three recesses (10a) through which the fastening bolts (11) can pass, and that the furrow former (7) can be fastened to the coulter disc (3) in at least two different positions by means of the at least two recess patterns (14a-c) via the at least three fastening bolts (11).

5. Coulter assembly (4) according to at least one of claims 2 to 4,
**characterized in that** the spring elements (15) can be operatively preloaded in the direction of the coulter disc (3), and that at least one fastening bolt (11) is associated with means (11a, 11b) which are designed to adjustably preload the spring elements (15) associated with the fastening bolt (11).

6. Coulter assembly (4) according to claim 5, **characterized in that** the means (11a, 11b) comprise at least one pressure disc (11b) and at least one clamping body (11a), and that the pressure disc (11b) can be pressed against the coulter carrier (10) and/or the support arm (8) by means of the clamping body (11a).

7. Coulter assembly (4) according to either claim 5 or claim 6,
**characterized in that** the furrow former (7) is held at least approximately automatically in contact with the coulter disc (3) by means of the spring elements (15).

8. Coulter assembly (4) according to at least one of claims 2 to 7,
**characterized in that** the furrow former (7) is fastened to the support arm (8) in an at least partially resiliently yielding manner, in particular relative to the coulter disc (3), by means of the spring elements (15) associated with the at least three fastening bolts (11).

9. Coulter assembly (4) according to at least one of the preceding claims, **characterized in that** the holding device (9) is formed in one piece with the furrow former (7), and that the holding device (9) is designed at least partially as a distribution line (12).

10. Distribution machine (1) for seed and/or fertilizer, comprising at least one storage container (2) and at least one disc coulter (3) arranged on a frame (5) of the distribution machine (1) via a coulter assembly (4), the storage container (2) being connected to the disc coulter (3) via at least one spreading device by means of at least one spreading line and the distribution machine (1) being designed to distribute seed and/or fertilizer on the disc coulter (3), **characterized in that** the coulter assembly (4) is designed according to at least one of the preceding claims 1-9, that the working depth of the disc coulter (3) can be adjusted by rotating the frame (5), and that the furrow former (7) can be attached to the support arm (8) via the at least two drilling patterns (13a, 13b) of the support arm (8), so as to be adapted to the working depth of the coulter disc (3).

## Revendications

1. Agencement de soc (4) pour un soc à disques (3), en particulier un soc à engrais, comprenant un disque de soc (3) monté de manière à pouvoir tourner à l'extrémité inférieure d'un bras de support (8) et un élément ouvreur (7) disposé à l'extrémité inférieure du bras de support (8) à l'aide d'un dispositif de maintien (9), dans lequel l'agencement de soc (4) peut être disposé sur un châssis (5) rotatif d'un distributeur (1) par l'intermédiaire de l'extrémité supérieure du bras de support (8), dans lequel le dispositif de maintien (9) présente un support de soc (10) et l'élément ouvreur (7) est fixé au bras de support (8) par l'intermédiaire du support de soc (10) à l'aide d'au moins deux boulons de fixation (11) disposés à distance l'un de l'autre, réalisés en particulier sous forme de boulons filetés (11), lesquels boulons de fixation traversent le support de soc (10) et le bras de support (8), dans lequel au moins trois boulons de fixation (11) sont prévus et les au moins trois boulons de fixation (11) sont disposés de manière à former les angles (A, B, C) d'un triangle (ABC), **caractérisé en ce que** le bras de support (8) présente au moins deux schémas de perçage (13a, 13b) disposés à distance l'un de l'autre et comportant respectivement au moins trois perçages (8a) pouvant être traversés par les boulons de fixation (11), **en ce que** l'élément ouvreur (7) peut être fixé, dans au moins deux positions différentes par rapport au bras de support (8), à l'aide des au moins deux schémas de perçage (13a, 13b) par l'intermédiaire des au moins trois boulons de fixation (11).

2. Agencement de soc (4) selon la revendication 1, **caractérisé en ce qu'**au moins un organe élastique (15) est associé aux au moins trois boulons de fixation (11) sur le côté du support de soc (10), lequel côté est opposé au bras de support (8), et entre le support de soc (10) et le bras de support (8).

3. Agencement de soc (4) selon au moins l'une des revendications précédentes, **caractérisé en ce que** le disque de soc (3) est monté de manière à pouvoir tourner sur le bras de support (8), au moins approximativement à l'intérieur du triangle (ABC) formé par les boulons de fixation (11).

4. Agencement de soc (4) selon au moins l'une des revendications précédentes, **caractérisé en ce que** le support de soc (10) présente au moins deux schémas de cavité (14a-c) disposés à distance l'un de l'autre et comportant respectivement au moins trois cavités (10a) pouvant être traversées par les boulons de fixation (11), **en ce que** l'élément ouvreur (7) peut être fixé, dans au moins deux positions différentes par rapport au disque de soc (3), à l'aide des au moins deux schémas de cavité (14a-c) par l'intermédiaire des au moins trois boulons de fixation (11).

5. Agencement de soc (4) selon au moins l'une des revendications 2 à 4, **caractérisé en ce que** les organes élastiques (15) peuvent être précontraints de manière fonctionnelle en direction du disque de soc (3), **en ce qu'**à au moins un boulon de fixation (11) sont associés des moyens (11a, 11b) qui sont conçus pour précontraindre de manière réglable les organes élastiques (15) associés au boulon de fixation (11).

6. Agencement de soc (4) selon la revendication 5, **caractérisé en ce que** les moyens (11a, 11b) comprennent au moins un disque de pression (11b) et au moins un corps de serrage (11a), **en ce que** le disque de pression (11b) peut être pressé contre le support de soc (10) et/ou le bras de support (8) à l'aide du corps de serrage (11a).

7. Agencement de soc (4) selon la revendication 5 ou 6,
**caractérisé en ce que** l'élément ouvreur (7) est maintenu au moins approximativement automatiquement en appui contre le disque de soc (3) à l'aide des organes élastiques (15).

8. Agencement de soc (4) selon au moins l'une des revendications 2 à 7, **caractérisé en ce que** l'élément ouvreur (7) est fixé, de manière à pouvoir s'écarter, au bras de support (8) à l'aide des organes élastiques (15) associés aux au moins trois boulons de fixation (11), de manière au moins partiellement élastique, en particulier par rapport au disque de soc (3).

9. Agencement de soc (4) selon au moins l'une des revendications précédentes, **caractérisé en ce que** le dispositif de maintien (9) est réalisé d'une seule pièce avec l'élément ouvreur (7), **en ce que** le dispositif de maintien (9) est réalisé au moins partiellement sous forme de conduite de distribution (12).

10. Distributeur (1) de semences et/ou d'engrais, comprenant au moins un réservoir de stockage (2) et au moins un soc à disque (3) disposé sur un châssis (5) du distributeur (1) par l'intermédiaire d'un agencement de soc (4), dans lequel le réservoir de stockage (2) est relié au soc à disque (3) par l'intermédiaire d'au moins un appareil d'épandage à l'aide d'au moins une conduite d'épandage et le distributeur (1) est conçu pour distribuer des semences et/ou de l'engrais sur le soc à disque (3), **caractérisé en ce que** l'agencement de soc (4) est réalisé selon au moins l'une des revendications 1 à 9 précédentes, **en ce que** la profondeur de travail du soc à disque (3) peut être réglée à l'aide d'une rotation du châssis (5), **en ce que** l'élément ouvreur (7) peut être fixé au bras de support (8) par l'intermédiaire des au moins deux schémas de perçage (13a, 13b) du bras de support (8), de manière adaptée à la profondeur de travail du disque de soc (3).
